# EUROPÄISCHE PATENTANMELDUNG

(11) **EP 2 615 426 A1**
(43) Veröffentlichungstag der Anmeldung: **17.07.2013**
(21) Anmeldenummer: 12151293.3
(22) Anmeldetag: 16.01.2012
(51) Int. Cl.: G01D 11/24

(54) **Sensor**

(71) Anmelder: Baumer Electric AG, 8501 Frauenfeld (CH)
(72) Erfinder: Jürgens, Alexander, 8500 Frauenfeld (CH); Scherrer, Thomas, 8500 Frauenfeld (CH); Preuss, Volker, 78464 Konstanz (DE); Wehrle, Wolfgang, 78467 Konstanz (DE)
(74) Vertreter: Strauss, Steffen

(57) **Zusammenfassung**

Sensor (1) und Verfahren zur Herstellung eines Sensors (1), mit einem wenigstens teilweise aus Kunststoff bestehenden Gehäuse (2) mit einem Gehäusetopf (3) und einem Gehäusedeckel (4), und einer innerhalb des Gehäuses (2) angeordneten Sensorbaugruppe (41), wobei der Gehäusedeckel (4) mit Kontaktelementen (21) ausgeführt ist, welche durch eine Gehäusewandung (15) des Gehäusedeckels (4) geführt und in dem Gehäusedeckel (4) integriert sind, wobei ein äußerer Teil (23) der Kontaktelemente (21) außerhalb des Gehäuses (2) und ein innerer Teil (22) der Kontaktelemente (21) innerhalb eines von dem Gehäuses (2) eingeschlossenen Innenraumes (36) angeordnet sind, wobei durch den Gehäusedeckel (4) bei einem Verbinden der Kontaktelemente (21) mit der wenigstens einen Sensorbaugruppe (41) gleichzeitig eine Öffnung (16) des Gehäusetopfes (3) verschliessbar und die Kontaktelemente mit der Sensorbaugruppe (41) elektrisch verbindbar sind, so dass der Gehäusedeckel (4) als elektrisches Steckverbindungsteil zur elektrischen Verbindung der Sensorbaugruppe (41) dient.

## Beschreibung

Die vorliegende Erfindung betrifft einen Sensor und ein Verfahren zur Herstellung eines Sensors gemäß Anspruch 1 und Anspruch 12.

Sensoren, zum Beispiel optische, induktive oder kapazitive Sensoren, werden in den verschiedensten technischen Anwendungen zur Erfassung von physikalischen oder chemischen Parametern eingesetzt. Sensorkomponenten, insbesondere Elektronikkomponenten, des Sensors sind dabei im Allgemeinen innerhalb eines von einem Gehäuse eingeschlossenen Innenraums angeordnet. Das Gehäuse dient dazu, die Sensorkomponenten, insbesondere Elektronikkomponenten, vor schädigenden Umwelteinflüssen zu schützen. Ferner ist es erforderlich, Kontaktelemente durch eine Gehäusewandung des Gehäuses zu führen, um an einem äußeren Teil der Kontaktelemente den Sensor mit elektrischem Strom versorgen zu können und elektrische Signale zur Verfügung zu stellen. Ein innerer Teil der Kontaktelemente ist in oder an dem Innenraum innerhalb des Gehäuses angeordnet und dient der Übertragung der elektrischen Signale.

Die DE 10 2008 059 661 A1 zeigt einen optischen Sensor mit einem Gehäuse, mit einer innerhalb des Gehäuses angeordneten elektronischen Sensorbaugruppe, mit einem elektrischen Kabelanschluss für die Kontaktierung eines Kabels eines externen Gerätes an den Sensor sowie mit einer elektrischen Verbindung zwischen der Sensorbaugruppe und dem Kabelanschluss, wobei für die elektrische Verbindung zwischen der Sensorbaugruppe und dem Kabelanschluss für die Sensorbaugruppe sowie der Kabelanschluss derart elektrische Kontaktierelemente sowie dazu korrespondierende elektrische Gegenelemente aufweisen, dass beim Einsetzen der Sensorbaugruppe in das Gehäuse zwischen der Sensorbaugruppe und dem Kabelanschluss selbstständig eine elektrische Kontaktierung erfolgt.

Die DE 10 2008 042 720 A1 zeigt ein Sensorgehäuse, aufweisend wenigstens einen Rohrabschnitt, wobei der Rohrabschnitt aus metallischem Glas geformt ist.

Die WO 2007/131372 A2 zeigt ein Sensorgehäuse, umfassend einen metallischen äußeren Gehäusemantel mit einer frontseitigen ersten Öffnung und einer rückseitigen zweiten Öffnung, wobei an der Innenwand des äußeren Gehäusemantels ein innerer Gehäusemantel aus Kunststoff angespritzt ist.

Die Aufgabe der vorliegenden Erfindung besteht darin, einen Sensor, bestehend aus eine Gehäuse und einer Sensorbaugruppe, auf einfache und kostengünstige Weise herzustellen.

Diese Aufgabe wird gelöst mit einem Sensor, umfassend ein wenigstens teilweise aus Kunststoff bestehendes Gehäuse mit einem Gehäusetopf und einem Gehäusedeckel, und einer innerhalb des Gehäuses angeordneten Sensorbaugruppe. Der Gehäusedeckel ist mit Kontaktelementen ausgeführt, welche durch eine Gehäusewandung des Gehäusedeckels geführt und in dem Gehäusedeckel integriert sind. Ein äußerer Teil der Kontaktelemente sind außerhalb des Gehäuses und ein innerer Teil der Kontaktelemente innerhalb eines von dem Gehäuse eingeschlossenen Innenraums angeordnet. Dabei ist der Gehäusedeckel mit den Kontaktelementen so ausgeführt, dass bei einem Verbinden der Kontaktelemente mit der wenigstens einen Sensorbaugruppe gleichzeitig eine Öffnung des Gehäusetopfes verschliessbar und die Kontaktelemente mit der Sensorbaugruppe elektrisch verbindbar sind, so dass der Gehäusedeckel als elektrisches Steckverbindungsteil zur elektrischen Verbindung der Sensorbaugruppe dient.

Der Gehäusedeckel fungiert damit sowohl einerseits zum Verschließen der Öffnung des Gehäusetopfes als auch als elektrisches Verbindungsteil von Sensoranschlussleitungen zu der Sensorbaugruppe innerhalb des Gehäuses.

Mit dem erfindungsgemässen Sensor können somit in vorteilhafter Weise verschiedenartige Sensorbaugruppen für ein gleiches Gehäuse vorgesehen werden. Zudem können mit einer Änderung des Gehäusedeckels verschiedene Anschlussvarianten des Sensors realisiert werden. Dabei können die äusseren Kontakte der Kontaktelemente an unterschiedlichen Positionen an dem Gehäusedeckel ausgeführt sein. Ferner können die Anzahl der Kontaktelemente variiert werden.

Zweckmäßig ist die Geometrie der von dem Gehäusedeckel verschlossenen Öffnung des Gehäusetopfes dahingehend ausgebildet, dass die Öffnung zum Einführen der Sensorbaugruppe ausgebildet ist, so dass die Sensorbaugruppe, vorzugsweise vollständig, innerhalb des von dem Gehäuse eingeschlossenen Innenraum positionierbar ist.

In einer ergänzenden Ausgestaltung umfasst die Sensorbaugruppe des Sensors wenigstens eine Leiterplatte mit Leiterbahnen und wenigstens einer Elektronikkomponenten. Die wenigstens eine Elektronikkomponente ist mit der Leiterplatte elektrisch und mechanisch verbunden. Die Leiterplatte ist vorzugsweise vollständig innerhalb eines von dem des Gehäuses eingeschlossenen Innenraumes angeordnet.

An der Sensorbaugruppe, insbesondere wenigstens an einer Elektronikkomponente und / oder an der Leiterplatte sind elektrische Gegenkontaktelemente ausgebildet, welche elektrisch mit dem inneren Teil der Kontaktelemente verbunden sind. Erfindungsgemäss ist der innere Teil der Kontaktelemente ausgebildet, die Sensorbaugruppe in dem Gehäusedeckel aufzunehmen, bei Verschluss des Gehäusetopfes durch den Gehäusedeckel wenigstens teilweise in dem Gehäusetopf zu positionieren und gleichzeitig eine elektrische Verbindung mit der Sensorbaugruppe herzustellen.

In einer weiteren Ausführungsform sind die Gegenkontaktelemente als elektrisch leitfähige Flächen, vorzugsweise als Leiterbahnpads ausgebildet. Dabei sind unter Leiterbahnpads elektrisch leitenden Flächen zu verstehend, die mit den Leiterbahnen elektrisch verbunden sind. Der innere Teil der Kontaktelemente ist als Klemmkontakt, vorzugsweise als Federklemmkontakt ausgebildet.

Die Leiterplatten können innerhalb des Innenraums des Gehäusetopfes an unterschiedlichen Lagen ausgebildet sein und lediglich durch die Verwendung eines Gehäusedeckels mit Kontaktelementen, bei denen der innere Teil an unterschiedlichen Lagen angeordnet ist, können Leiterplatten an einer unterschiedlichen Lage innerhalb eines selben Gehäusetopfes angeordnet sein. Hierfür ist lediglich ein unterschiedlicher Gehäusedeckel mit inneren Teilen der Kontaktelemente an unterschiedlichen Lagen erforderlich. Anstelle von Leiterplatten mit Elektronikkomponenten können auch Elektronikkomponenten direkt mit den Kontaktelementen des Gehäusedeckels verbunden sein.

Dadurch können die Kosten für die Herstellung von unterschiedlichen Sensoren wesentlich reduziert werden, weil durch die unterschiedliche Anordnung von Leiterplatten innerhalb des Gehäusetopfes unterschiedliche Sensoren hergestellt werden können und dabei ein identischer Gehäusetopf verwendet werden kann. Der Gehäusetopf besteht vorzugsweise aus einem thermoplastischen Kunststoff. Bei der Herstellung des Gehäusetopfes aus thermoplastischem Kunststoff, beispielsweise mittels Spritzgießen, ist somit nur ein Spritzgusswerkzeug für die Herstellung erforderlich. Zweckmäßig sind die Gegenkontaktelemente unmittelbar mit den inneren Teilen der Kontaktelemente verbunden, so dass kein elektrisches Verbindungskabel zur elektrischen Verbindung der Gegenkontaktelemente mit den inneren Teilen vorhanden ist.

In einer ergänzenden Variante liegt wenigstens ein Paar von zwei inneren Teilen der Kontaktelemente auf wenigstens einem Paar von Gegenkontaktelementen auf. Die Gegenkontaktelemente des wenigstens einen Paares sind an zwei gegenüberliegenden Seiten der Sensorbaugruppe angeordnet, so dass das wenigstens eine Paar von Gegenkontaktelementen zwischen dem wenigstens einen Paar von inneren Teilen der Kontaktelemente eingeklemmt ist.

In einer ergänzenden Ausführungsform des Sensors ist die Sensorbaugruppe, insbesondere ausschließlich, mittelbar mit wenigstens einem Verbindungsteil mechanisch mit dem Gehäuse verbunden, so dass insbesondere eine unmittelbare mechanische formschlüssige Verbindung zwischen dem Gehäuse und der Sensorbaugruppe ausgebildet ist, so dass die Sensorbaugruppe in dem Gehäuse wenigstens teilweise positionierbar ist.

In einer ergänzenden Ausgestaltung sind an dem wenigstens einen Verbindungsteil zwei Verbindungsarme ausgebildet und innenseitig an dem Gehäuse, insbesondere dem Gehäusetopf, zwei Haltearme ausgebildet. Die beiden Verbindungsarme sind zwischen den beiden Haltearmen angeordnet, so dass aufgrund eines mechanischen Kontaktes zwischen den Verbindungsarmen und den Haltearmen eine formschlüssige Verbindung zwischen den Verbindungsarmen und den Haltearmen besteht.

Darüber hinaus sind die Verbindungsarme geringfügig elastisch vorgespannt, sodass zwischen den Halte- und Verbindungsarmen eine Druckkraft besteht. Dadurch kann zusätzlich eine kraftschlüssige Verbindung zwischen den Verbindungsarmen und den Haltearmen hergestellt werden.

Zweckmäßig weist das Verbindungsteil wenigstens eine Führungsdoppelfeder auf. Die Führungsdoppelfeder ist dabei zur Führung des Verbindungsteils während des Einschiebens in den Gehäusetopf an wenigstens einem Führungselement gelagert.

An dem Gehäuse, insbesondere an dem Gehäusetopf, ist wenigstens eine lichtdurchlässige Gehäuseteilwandung ausgebildet und / oder sämtliche Gehäusewandungen des Gehäusetopfes und / oder des Gehäusedeckels sind eine selbsttragende miteinander verbundene Baueinheit.

Der Gehäusedeckel wird mit dem Gehäusetopf in vorteilhafter Weise stoffschlüssig verbunden. Dies kann mit einem Ultraschallschweißen oder in Form einer Klebung von Gehäusedeckel auf den Gehäusetopf erfolgen.

Die Aufgabe der vorliegenden Erfindung wird zudem mit einem Verfahren zur Herstellung eines Sensors gelöst. Das erfindungsgemässe Verfahren weist die folgenden Verfahrensschritte auf:
- zur Verfügung stellen eines wenigstens teilweise aus Kunststoff bestehenden Gehäuses bestehend aus einem Gehäusetopf und einem Gehäusedeckel,
- zur Verfügung stellen einer Sensorbaugruppe,
- Einführen der Sensorbaugruppe in einen von dem Gehäusetopf eingeschlossenen Innenraum,
- Verschließen einer Öffnung des Gehäusetopfes mit dem Gehäusedeckel, wobei während des Verschliessens gleichzeitig Gegenkontaktelementen an der Sensorbaugruppe mit inneren Teilen von Kontaktelementen des Gehäusedeckels elektrisch verbunden und die Sensorbaugruppe von den inneren Teilen der Kontaktelemente des Gehäusedeckels innerhalb des Gehäusetopfes positioniert wird.

In vorteilhafter Weise werden die Gegenkontaktelemente mit den inneren Teilen der Kontaktelemente an dem Gehäusedeckel mechanisch verbunden, so dass mit den inneren Teilen der Kontaktelemente die Sensorbaugruppe innerhalb des Gehäuses positioniert und mechanisch verbunden werden kann.

In einem weiteren Verfahrensschritt wird der Gehäusedeckel mit dem Gehäusetopf stoffschlüssig, insbesondere mit Ultraschallschweißen oder Kleben verbunden, so dass dadurch in preiswerter Weise eine zuverlässige und vorzugsweise fluiddichte Verbindung zwischen dem Gehäusedeckel und dem Gehäusetopf hergestellt werden kann.

Die Sensorbaugruppe, kann insbesondere ausschließlich, mittelbar mit wenigstens einem Verbindungsteil mit dem Gehäuse mechanisch verbunden werden, so dass die Sensorbaugruppe innerhalb des Gehäuses positioniert ist.

Zweckmäßig kontaktieren beim Einführen der Leiterplatte mit dem Verbindungsteil zuerst Führungsfedern, insbesondere Führungsdoppelfedern, konische Führungsflächen an Führungselementen, sodass dadurch eine Führung und Ausrichtung der Sensorbaugruppe mit dem Verbindungsteil während des Einführens erfolgt. Anschliessend kontaktieren Verbindungsarme an dem Verbindungsteil Haltearme an dem Gehäuse, insbesondere an dem Gehäusetopf.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Sensors,
- Fig. 2: einen Schnitt eines Gehäusetopfes und eines Gehäusedeckels senkrecht zu zwei Seitenwandungen des Gehäusetopfes,
- Fig. 3: eine perspektivische Ansicht einer Leiterplatte und eines Verbindungsteiles,
- Fig. 4: eine perspektivische Ansicht eines Teils einer Bodenwandung und der Seitenwandung des Gehäusetopfes,
- Fig. 5: einen Schnitt des Gehäusetopfes und des Verbindungsteils senkrecht zu zwei Seitenwandungen des Gehäusetopfes mit einem Verbindungsteil innerhalb des Gehäusetopfes und
- Fig. 6: einen Teilschnitt des Gehäusetopfes, der Leiterplatte und des Verbindungsteiles und einen vollständigen Schnitt des Gehäusedeckels senkrecht zu der Vorder- und Rückwandung.

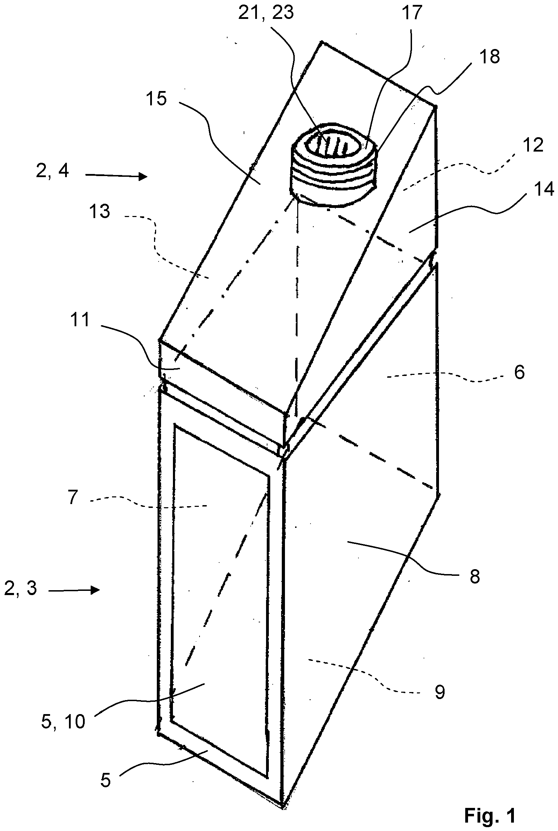

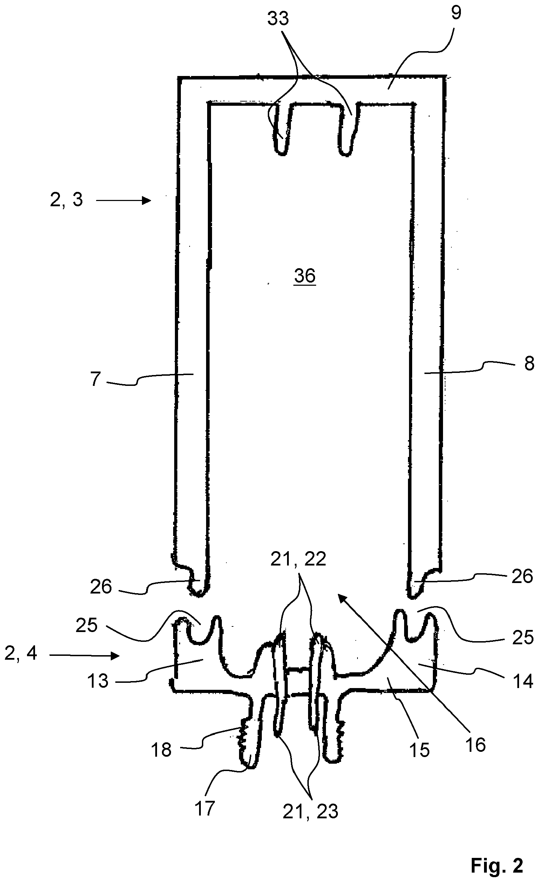

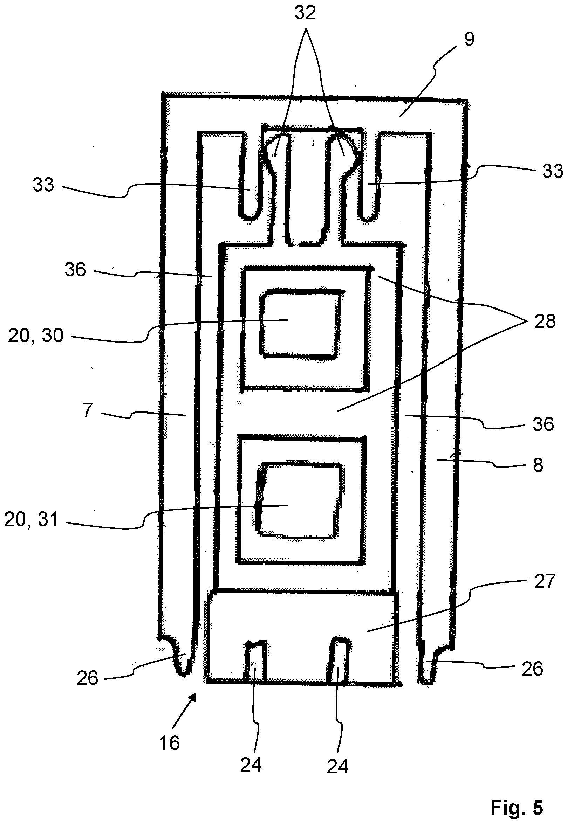

Ein in Fig. 1 dargestellter optischer Sensor 1 weist ein Gehäuse 2 auf. Das Gehäuse 2 ist vollständig aus thermoplastischem Kunststoff ausgeführt. Das Gehäuse 2 umfasst einen Gehäusetopf 3 mit einer Vorderwandung 5, einer Rückwandung 6, einer ersten Seitenwandung 7, einer zweiten Seitenwandung 8 und einer Bodenwandung 9. Aufgrund der perspektivischen Darstellung des Gehäusetopfes 3 in Fig. 1 sind die Rückwandung 6, die erste Seitenwandung 7 und die Bodenwandung 9 nicht sichtbar und deshalb lediglich strichliert dargestellt. Da es sich um einen optischen Sensor 1 handelt, ist eine Gehäusewandung des Gehäuses 2, nämlich die Vorderwandung 5, teilweise als lichtdurchlässige Gehäuseteilwandung 10 ausgebildet. Die übrigen Gehäusewandungen des Gehäusetopfs 3 sind vorzugsweise lichtundurchlässig. Der Gehäusetopf 3 schließt damit einen Innenraum 36 ein und der Gehäusetopf weist somit eine Öffnung 16 (Fig. 2 und 5) auf.

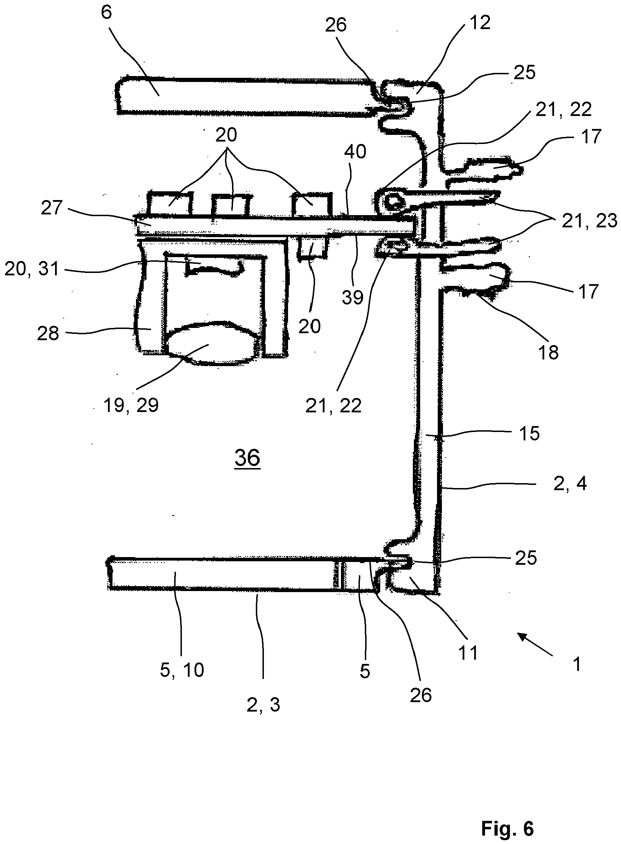

Die Öffnung 16 des Gehäusetopfs 3 ist von einem Gehäusedeckel 4 verschlossen. Der Gehäusedeckel 4 besteht aus thermoplastischem Kunststoff. Der Gehäusedeckel 4 weist in analoger Weise eine Vorderwandung 11, eine Rückwandung 12, eine erste Seitenwandung 13, eine zweite Seitenwandung 14 und eine Deckwandung 15 auf. An der Deckwandung 15 des Gehäusedeckels 4 ist ein Verbindungsstutzen 17 mit einem Außengewinde 18 einteilig ausgebildet. Innerhalb des Verbindungsstutzens 17 sind vier elektrische Kontaktelemente 21 aus Metall von dem thermoplastischen Kunststoff des Gehäusedeckels 4 eingelegt und geklebt. Dabei handelt es sich um zwei Paare von elektrischen Kontaktelementen 21, welche durch die Deckwandung 15 durchgeführt sind, sodass ein äußerer Teil 23 der Kontaktelemente 21 außerhalb des Gehäuses 2 (Fig. 1, 2 und 6) sowie ein innerer Teil 22 der Kontaktelemente 21 innerhalb des Innenraums 36 angeordnet sind (Fig. 2 und 6).

Der Gehäusetopf 3, ist mit einer Feder 26 versehen, die in einer entsprechenden Nut 25 an dem Gehäusedeckel 4 angeordnet ist. Aufgrund dieser Nut-Feder-Verbindung zwischen dem Gehäusetopf 3 und dem Gehäusedeckel 4 besteht somit eine formschlüssige Verbindung zwischen dem Gehäusetopf 3 und dem Gehäusedeckel 4. Ferner sind der Gehäusetopf 3 mit dem Gehäusedeckel 4 mittels Ultraschallschweißen stoffschlüssig miteinander verbunden (nicht dargestellt).

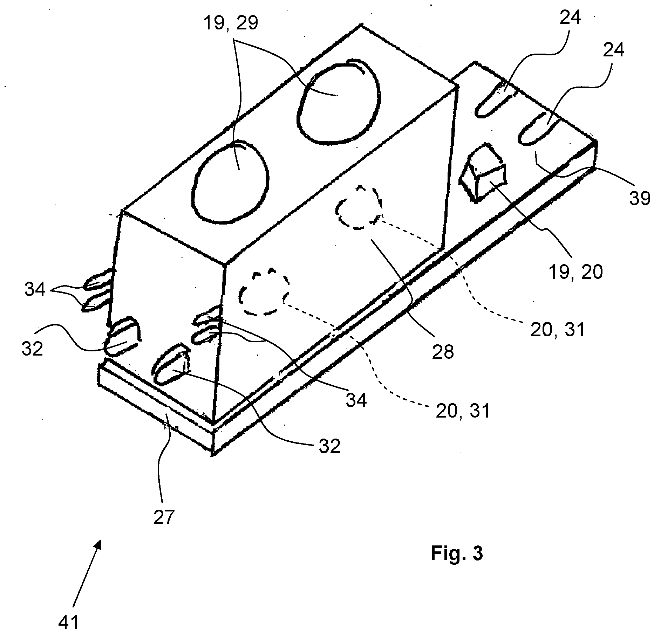

An einer Leiterplatte 27 (Fig. 3, 5 und 6) mit nicht dargestellten Leiterbahnen sind an einer ersten Seite 39 Elektronikkomponenten 20 als Sensorkomponenten 19 angeordnet. Ferner sind an einer zweiten Seite 40 der Leiterplatte 27 eine größere Anzahl von Elektronikkomponenten 20 angeordnet. Die Elektronikkomponenten 20 sind dabei mechanisch mit der Leiterplatte 27 verbunden und mit Leiterbahnen auch elektrisch miteinander verbunden bzw. kontaktiert. Mit der ersten Seite 39 der Leiterplatte 27 ist mechanisch ein Verbindungsteil 28 aus thermoplastischem Kunststoff verbunden. An dem Verbindungsteil 28 sind oberseitig zwei Linsen 29 als Sensorkomponenten 19 angeordnet. Das Verbindungsteil 28 bildet an den beiden Linsen 29 einen entsprechenden Hohlraum aus. Die Leiterplatte 27 ist mit vier Gegenkontaktelementen 24 versehen. An der ersten Seite 39 sind jeweils zwei elektrische Gegenkontaktelemente 24 ausgebildet und entsprechend korrespondierend an der zweiten Seite 40 zwei elektrische Gegenkontaktelemente 24. Dabei bilden jeweils zwei Gegenkontaktelemente 24 ein Paar von Gegenkontaktelementen 24, die genau gegenüberliegend an der ersten und an der zweiten Seite 39, 40 der Leiterplatte 27 vorhanden sind.

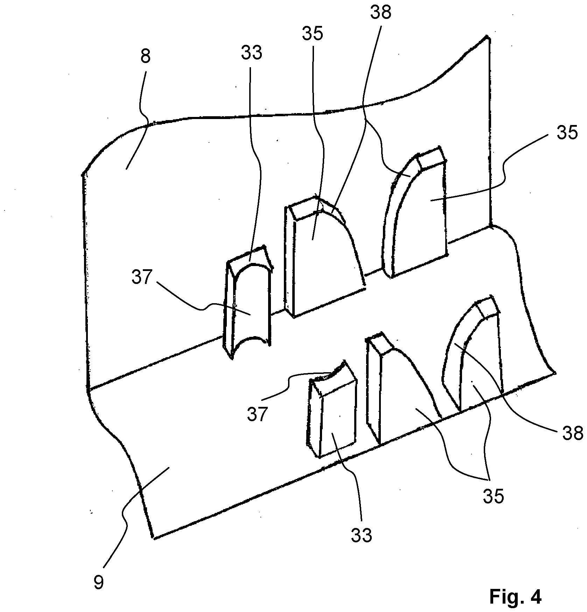

An dem Verbindungsteil 28 aus thermoplastischem Kunststoff sind an einem vorderen Ende des Verbindungsteils 28 zwei Verbindungsarme 32 einteilig mit dem Verbindungsteil 28 ausgebildet. Ferner sind zwei Führungsdoppelfedern 34 einteilig mit dem Verbindungsteil 28 ausgebildet. An der Bodenwandung 9 des Gehäusetopfes 3 sind zwei Haltearme 33 (Fig. 4) mit einer konkaven Haltefläche 37 ausgebildet. Ferner sind an den beiden Seitenwandungen 7, 8 (in Fig. 4 ist nur die zweite Seitenwandung 8 dargestellt) sowie an der Bodenwandung 9 Führungselemente 35 mit konischen Führungsflächen 38 ausgebildet.

Bei der Montage des Sensors 1 wird zunächst der Gehäusetopf 3 und der Gehäusedeckel 4 zur Verfügung gestellt oder hergestellt. Darüber hinaus wird die Leiterplatte 27 mit den daran angeordneten Elektronikkomponenten 20 sowie mit dem Verbindungsteil 28 als Sensorbaugruppe 41 zur Verfügung gestellt. An der Sensorbaugruppe 41 sind somit sämtliche Sensorkomponenten 19, insbesondere Elektronikkomponenten 20, angeordnet. In den von dem Gehäusetopf 3 eingeschlossenen Innenraum 36 wird die Sensorbaugruppe 41 eingeführt, wobei das Verbindungsteil 28 mit dem in Fig. 3 dargestellten linken Ende mit den beiden Verbindungsarmen 32 sowie den Führungsdoppelfedern 34 zuerst in die Öffnung 16 eingeführt wird. Dabei wird die zweite Seite 40 der Leiterplatte 27 mit einem geringen Abstand zu der Rückwandung 6 des Gehäusetopfs 3 solange in den Innenraum 36 eingeführt, bis zuerst die beiden Führungsdoppelfedern 34 die konischen Führungsflächen 38 der Führungselemente 35 kontaktieren, da die Führungselemente 15 länger sind als die beiden Haltearme 33. Die Länge der beiden Verbindungsarme 32 und der Führungsdoppelfedern 34 ist dabei im Wesentlichen gleich groß. Die Führungsdoppelfedern 34 sind aufgrund ihrer geringen Dicke bzw. Breite aus thermoplastischem Kunststoff leicht biegbar bzw. verformbar. Die Führungsdoppelfedern 34 ermöglichen aufgrund der Führung an den beiden konischen Führungsflächen 38 der Paare der Führungselemente 35 eine Ausrichtung und Führung der beiden Verbindungsarme 32 in die konischen Halteflächen 37 an den Haltearmen 33. Die beiden Verbindungsarme 32 weisen außenseitig Auswölbungen (Fig. 5) auf, sodass dadurch aufgrund der teilkugelförmigen Auswölbungen und der konkaven Haltefläche 37 eine formschlüssige Verbindung zwischen den Verbindungsarmen 32 und den Haltearmen 33 besteht. Darüber hinaus ist der Abstand zwischen den beiden konkaven Halteflächen 37 an den beiden Haltearmen 33 geringfügig kleiner als der Abstand zwischen den beiden Auswölbungen an den Verbindungsarmen 32 vor dem Kontakt mit den beiden Haltearmen 33.

Damit werden beim Kontaktieren der beiden Verbindungsarme 32 mit den beiden Haltearmen 33 die beiden Verbindungsarme 32 geringfügig elastisch verformt, sodass die beiden Auswölbungen an den Verbindungsarmen 32 unter einer elastischen Vorspannung und Druckkraft an den beiden konkaven Halteflächen 37 aufliegen. Dadurch kann auch eine kraftschlüssige Verbindung zwischen den beiden Verbindungsarmen 32 und den beiden Haltearmen 33 hergestellt werden. Die beiden Verbindungsarme 32 stellen dabei auch einen Anschlag oder eine Begrenzung bei der Einführung der Sensorbaugruppe 41 dar. Diese kann nur so weit eingeführt werden, bis die beiden Verbindungsarme 32 in dem Haltearm 33 positioniert sind. Die Ausdehnung der Leiterplatte 27 in Richtung einer von der Leiterplatte 27 ausgerichteten Ebene ist dabei dahingehend ausgebildet, dass kein Kontakt zwischen der Leiterplatte 27 und dem Gehäusetopf 3 besteht.

Nach dem vollständigen Einführen der Sensorbaugruppe 41 in den Gehäusetopf 3 (Fig. 5) ist die Öffnung 16 mit dem Gehäusedeckel 4 zu verschließen. Beim Verbinden des Gehäusedeckels 4 mit dem Gehäusetopf 3 wird eine formschlüssige Verbindung zwischen der Nut 25 an dem Gehäusedeckel 4 und der Feder 26 an dem Gehäusetopf 3 hergestellt. Ferner wird gleichzeitig mit dem Aufschieben des Gehäusedeckels 4 auf den Gehäusetopf 3 neben der Nut-Feder-Verbindung auch eine elektrische Verbindung zwischen zwei Paaren von inneren Teilen 22 von insgesamt vier Kontaktelementen 21 mit den beiden Paaren von elektrischen Gegenkontaktelementen 24 an der Leiterplatte 27 hergestellt. Die insgesamt vier inneren Teile 22 der Kontaktelemente 21, die jeweils als Paare übereinander angeordnet sind und bei denen aufgrund der Schnittbildung in Fig. 6 nur jeweils ein Paar sichtbar ist, sind dabei an dem inneren Teil 22 als elastische Federn ausgebildet, sodass dadurch die Paare von Gegenkontaktelementen 24 unter einer Druckkraft zwischen den Paaren von inneren Teilen 22 der Kontaktelemente 21 angeordnet sind. Dadurch kann eine sichere und zuverlässige elektrische Verbindung zwischen den inneren Teilen 22 der Kontaktelemente 21 und den Gegenkontaktelementen 24 hergestellt werden. Zudem besteht eine ständige mechanische und dadurch auch elektrische Verbindung zwischen den inneren Teilen 22 und den Gegenkontaktelementen 24 besteht.

Insgesamt betrachtet sind mit dem erfindungsgemäßen Sensor 1 und dem erfindungsgemäßen Verfahren zur Herstellung des Sensors 1 wesentliche Vorteile verbunden. An dem Gehäusedeckel 4 sind die Kontaktelemente 21 ausgebildet, sodass der Gehäusedeckel 4 nicht nur als Gehäusedeckel 4 zum Verschließen der Öffnung 16 dient, sondern auch als elektrisches Steckverbindungsteil zur elektrischen Verbindung der Gegenkontaktelemente 24 an der Sensorbaugruppe 21 bzw. der Leiterplatte 27 mit den Kontaktelementen 21. Gleichzeitig kann die Leiterplatte 27 in vorteilhafter Weise in dem inneren Teilen 22 der Kontaktelemente 21 des Gehäusedeckels 4, insbesondere nach einem Verschliessen des Gehäusetopfes 3 mit dem Gehäusedeckel 4, positioniert werden. Längentoleranzen der Leiterplatte 27 können mit dieser vorteilhaften Positionierung geringfügig von den inneren Teilen 22 der Kontaktelemente 21 kompensiert werden.

Die Herstellung des Sensors 1 ist damit besonders einfach und preiswert. Zudem können an einem identischen Gehäuse 2 auch unterschiedliche Sensorbaugruppen 41 angeordnet werden.

## Patentansprüche

1. Sensor (1), mit einem wenigstens teilweise aus Kunststoff bestehenden Gehäuse (2) mit einem Gehäusetopf (3) und einem Gehäusedeckel (4),
und einer innerhalb des Gehäuses (2) angeordneten Sensorbaugruppe (41), wobei der Gehäusedeckel (4) mit Kontaktelementen (21) ausgeführt ist, welche durch eine Gehäusewandung (15) des Gehäusedeckels (4) geführt und in dem Gehäusedeckel (4) integriert sind,
wobei ein äußerer Teil (23) der Kontaktelemente (21) außerhalb des Gehäuses (2) und ein innerer Teil (22) der Kontaktelemente (21) innerhalb eines von dem Gehäuses (2) eingeschlossenen Innenraumes (36) angeordnet sind,
wobei durch den Gehäusedeckel (4) bei einem Verbinden der Kontaktelemente (21) mit der wenigstens einen Sensorbaugruppe (41) gleichzeitig eine Öffnung (16) des Gehäusetopfes (3) verschliessbar und die Kontaktelemente (21) mit der Sensorbaugruppe (41) elektrisch verbindbar sind, so dass der Gehäusedeckel (4) als elektrisches Steckverbindungsteil zur elektrischen Verbindung der Sensorbaugruppe (41) dient.

2. Sensor nach Anspruch 1, **dadurch gekennzeichnet, dass** die Öffnung (16) des Gehäusetopfes (3) zum Einführen der Sensorbaugruppe (41) ausgebildet ist, so dass die Sensorbaugruppe (41), vorzugsweise vollständig innerhalb des von dem des Gehäuse (2) eingeschlossenen Innenraumes (36) positionierbar ist.

3. Sensor nach Anspruch 2, **dadurch gekennzeichnet, dass** die Sensorbaugruppe (41) aus wenigstens einer Leiterplatte (27) und wenigstens einer Elektronikkomponenten (20) besteht.

4. Sensor nach einem der vorhergehenden Ansprüche, **dadurch gekennzeichnet, dass** an der Sensorbaugruppe (41), insbesondere wenigstens an einer Elektronikkomponente (20) und / oder an der Leiterplatte (27) elektrische Gegenkontaktelemente (24) ausgebildet sind, welche elektrisch mit dem inneren Teil (22) der Kontaktelemente (21) verbunden sind.

5. Sensor nach Anspruch 4, **dadurch gekennzeichnet, dass** der inneren Teil (22) der Kontaktelementen (21) ausgebildet ist, die Sensorbaugruppe (41) in dem Gehäusedeckel (4) aufzunehmen, bei Verschluss des Gehäusetopfes (3) durch den Gehäusedeckel (4) wenigstens teilweise in dem Gehäusetopf (3) zu positionieren und gleichzeitig eine elektrische Verbindung mit der Sensorbaugruppe (41) herzustellen.

6. Sensor nach Anspruch 5, **dadurch gekennzeichnet, dass** die Gegenkontaktelemente (24) als elektrisch leitfähige Flächen, vorzugsweise als Leiterbahnenpads ausgebildet sind und der inneren Teil (22) der Kontaktelementen (21) als Klemmkontakt, vorzugsweise als Federklemmkontakt, ausgebildet ist.

7. Sensor nach Anspruch 6, **dadurch gekennzeichnet, dass** wenigstens ein Paar von zwei inneren Teilen (22) der Kontaktelemente (21) auf wenigstens einem Paar von Gegenkontaktelementen (24) aufliegt und die Gegenkontaktelemente (24) des wenigstens einen Paares an zwei gegenüberliegenden Seiten (39, 40) der Sensorbaugruppe (41) angeordnet sind, so dass das wenigstens eine Paar von Gegenkontaktelementen (24) zwischen dem wenigstens einen Paar von inneren Teilen (22) der Kontaktelemente (21) eingeklemmt ist.

8. Sensor nach einem der vorhergehenden Ansprüche, **dadurch gekennzeichnet, dass** die Sensorbaugruppe (41), insbesondere ausschließlich, mittelbar mit wenigstens einem Verbindungsteil (28) mechanisch mit dem Gehäuse (2) verbunden ist, so dass insbesondere eine unmittelbare mechanische formschlüssige Verbindung zwischen dem Gehäuse (2) und der Sensorbaugruppe (41) ausgebildet ist, so dass die Sensorbaugruppe (41) in dem Gehäuse (2) wenigstens teilweise positionierbar ist.

9. Sensor nach Anspruch 8, **dadurch gekennzeichnet, dass** an dem wenigstens einen Verbindungsteil (28) zwei Verbindungsarme (32) ausgebildet sind und innenseitig an dem Gehäuse (2), insbesondere dem Gehäusetopf (3), zwei Haltearme (33) ausgebildet sind und die beiden Verbindungsarme (32) zwischen den beiden Haltearmen (33) angeordnet sind, so dass aufgrund eines mechanischen Kontaktes zwischen den Verbindungsarmen (32) und den Haltearmen (33) eine formschlüssige Verbindung zwischen den Verbindungsarmen (32) und den Haltearmen (33) besteht.

10. Sensor nach einem der vorhergehenden Ansprüche, **dadurch gekennzeichnet, dass** das Gehäuse (2) vollständig aus, vorzugsweise thermoplastischen, Kunststoff besteht und an dem Gehäuse (2), insbesondere dem Gehäusetopf (3), wenigstens eine lichtdurchlässige Gehäuseteilwandung (10) ausgebildet ist und / oder sämtliche Gehäusewandungen (5, 6, 7, 8, 9, 10, 11, 12, 13, 14, 15) des Gehäusetopfes (3) und / oder des Gehäusedeckels (4) eine selbsttragende miteinander verbundene Baueinheit sind.

11. Sensor nach einem der vorhergehenden Ansprüche, **dadurch gekennzeichnet, dass** der Gehäusedeckel (4) mit dem Gehäusetopf (3) stoffschlüssig, insbesondere mit Ultraschallschweißen oder durch Kleben, verbunden ist.

12. Verfahren zur Herstellung eines Sensors (1) mit den Schritten:
- zur Verfügung stellen eines wenigstens teilweise aus Kunststoff bestehenden Gehäuses (2) bestehend aus einem Gehäusetopf (3) und einem Gehäusedeckel (4),
- zur Verfügung stellen einer Sensorbaugruppe (41),
- Einführen der Sensorbaugruppe (41) in einen von dem Gehäusetopf (3) eingeschlossenen Innenraum (36),
- Verschließen einer Öffnung (16) des Gehäusetopfes (3) mit dem Gehäusedeckel (4), wobei während des Verschliessens gleichzeitig Gegenkontaktelementen (24) an der Sensorbaugruppe (41) mit inneren Teilen (22) von Kontaktelementen (21) des Gehäusedeckels (4) elektrisch verbunden und die Sensorbaugruppe von den inneren Teilen (22) der Kontaktelemente (21) des Gehäusedeckels (4) innerhalb des Gehäusetopfes positioniert wird.

13. Verfahren nach Anspruch 12, **dadurch gekennzeichnet, dass** die Sensorbaugruppe (41, insbesondere ausschließlich, mittelbar mit wenigstens einem Verbindungsteil (28) mit dem Gehäuse (2) mechanisch verbunden werden, so dass die Sensorbaugruppe (41) innerhalb des Gehäuses positioniert ist.

14. Verfahren nach einem der Ansprüche 12 oder 13, **dadurch gekennzeichnet, dass** in einem weiteren Verfahrensschritt der Gehäusedeckel (4) mit dem Gehäusetopf (3) stoffschlüssig, insbesondere mit Ultraschallschweißen oder Kleben verbunden wird.

15. Verfahren nach einem oder mehreren der Ansprüche 12 bis 14, **dadurch gekennzeichnet, dass** die Gegenkontaktelemente (24) mit den inneren Teilen (22) der Kontaktelemente (21) an dem Gehäusedeckel (4) mechanisch verbunden werden, so dass mit den inneren Teilen (22) der Kontaktelemente (21) die Sensorbaugruppe (41), insbesondere bestehend aus einer Leiterplatte (27) und wenigsten einer Elektronikkomponenten (20) innerhalb des Gehäuses positioniert und mechanisch verbunden werden.
